# EUROPÄISCHE PATENTSCHRIFT

(11) **EP 3 102 453 B1**
(45) Veröffentlichungstag und Bekanntmachung des Hinweises auf die Patenterteilung: **19.09.2018**
(21) Anmeldenummer: 15704482.7
(22) Anmeldetag: 30.01.2015
(51) Int. Cl.: B60K 35/00, B60K 37/06

(54) **VERFAHREN UND VORRICHTUNG ZUM ANZEIGEN EINER VERÄNDERUNG EINER EINSTELLUNG ZUMINDEST EINES PARAMETERS EINER FAHRZEUGFUNKTION**
METHOD AND DEVICE FOR INDICATING A CHANGE TO A SETTING OF AT LEAST ONE PARAMETER OF A VEHICLE FUNCTION
PROCÉDÉ ET DISPOSITIF D'AFFICHAGE D'UNE MODIFICATION DU RÉGLAGE D'AU MOINS UN PARAMÈTRE D'UNE FONCTION D'UN VÉHICULE

(30) Priorität: 04.02.2014 DE 102014201930
(43) Veröffentlichungstag der Anmeldung: 14.12.2016
(73) Patentinhaber: Volkswagen Aktiengesellschaft, 38440 Wolfsburg (DE)
(72) Erfinder: SIMON, Defoort, 38154 Königslutter (DE)
(86) Internationale Anmeldenummer: PCT/EP2015/051929
(87) Internationale Veröffentlichungsnummer: WO 2015/117894

(56) Entgegenhaltungen:
- EP-A1- 2 018 992
- EP-A2- 1 977 926
- JP-A- H11 312 053
- US-A1- 2007 129 864
- US-A1- 2009 256 813

## Beschreibung

Die vorliegende Erfindung betrifft ein Verfahren und eine Vorrichtung zum Anzeigen einer Veränderung einer Einstellung zumindest eines Parameters einer Fahrzeugfunktion. Einstellungen eines Parameters einer Fahrzeugfunktion werden in der Regel auf einer Anzeigefläche in der Mittelkonsole des Fahrzeugs angezeigt. Dadurch sind sie für jeden Fahrzeuginsasse sichtbar. Wird die Einstellung verändert, wird dies in der Regel ebenso auf derselben Anzeigefläche angezeigt. Häufig wird eine Veränderung durch eine Veränderung numerischer Werte angezeigt. Dies ist insbesondere für den Fahrer des Fahrzeugs schwer nachzuvollziehen. Denn zur Verfolgung einer Veränderung numerischer Werte müsste der Fahrer für die Dauer der Einstellungsänderung seine Aufmerksamkeit vom Straßenverkehr auf die Anzeigeeinheit in der Mittelkonsole des Fahrzeugs richten. Dies wiederum ist mit einer seitlichen Drehung des Kopfes verbunden. Aus Gründen der Verkehrssicherheit ist dies jedoch nicht wünschenswert.

Die DE 10 2009 050 816 A1 beschreibt ein Verfahren und eine Bedieneinrichtung wenigstens zweier elektronischer Systeme in einem Fahrzeug. Jedem elektronischen System ist dabei eine individuelle, optisch wahrnehmbare Kennung zugeordnet. Ein Bedienmodus wird dadurch definiert, dass eine Bedienhandlung an einem Bedienelement detektiert wird.

Die DE 10 2005 049 127 A1 beschreibt eine Vorrichtung zur Anzeige von Informationen in einem Fahrzeug und/oder Bedienung von Fahrzeugeinheiten. Dabei besteht die Bedienoberfläche aus einem flexiblen Display. Weitere Anzeigesysteme in Fahrzeugen sind in der gattungsbildenden US 2007/0129864 A1 und in der EP 1 977 926 A2 und US 2009/0256813 A1 dargestellt.

Der vorliegenden Erfindung liegt die Aufgabe zugrunde, ein Verfahren und eine Vorrichtung bereitzustellen, durch welche insbesondere der Fahrer Einstellungsänderungen schnell und intuitiv wahrnehmen kann.

Diese Aufgabe wird durch ein Verfahren nach Anspruch 1 und eine Vorrichtung nach Anspruch 11 gelöst. Vorteilhafte Ausgestaltungen und Weiterbildungen sind Gegenstände der abhängigen Ansprüche.

Bei dem erfindungsgemäßen Verfahren zum Anzeigen einer Veränderung einer Einstellung zumindest eines Parameters einer Fahrzeugfunktion wird eine erste Einstellung des Parameters auf einer mehreren Fahrzeugsitzen zugeordneten ersten Anzeigeeinheit angezeigt.

Es wird ermittelt, ob ein erster Nutzer oder ein zweiter Nutzer die Nutzereingabe tätigt, wobei der erste Nutzer einem ersten Fahrzeugsitz und der zweite Nutzer einem zweiten Fahrzeugsitz zugeordnet wird. Wenn ermittelt worden ist, dass der zweite Nutzer die Nutzereingabe tätigt, wird während der Nutzereingabe die Veränderung der ersten Einstellung des Parameters auf einer zweiten Anzeigeeinheit, die nur dem zweiten Fahrzeugsitz zugeordnet ist, angezeigt. Erfindungsgemäß ist das Verfahren dadurch gekennzeichnet, dass die Fahrzeugfunktion eine Klimafunktion ist und der Parameter eine Innenraumtemperatur oder eine Belüftungsstärke ist.

Die erste Ausgabeeinheit ist "mehreren Fahrzeugsitzen zugeordnet". Darunter wird insbesondere verstanden, dass die erste Ausgabeeinheit von zumindest zwei Fahrzeugsitzen des Fahrzeugs aus einsehbar ist. Dies ist insbesondere dann der Fall, wenn die erste Anzeigeeinheit in der Mittelkonsole des Fahrzeugs angeordnet ist. Die zweite Ausgabeeinheit ist "nur einem Fahrzeugsitz zugeordnet". Darunter wird verstanden, dass die zweite Ausgabeeinheit vom zweiten Nutzer, der auf dem zweiten Fahrzeugsitz sitzt, besonders einfach einsehbar ist. Insbesondere muss der zweite Nutzer seinen Kopf nicht zur Seite drehen, um die zweite Anzeigeeinheit einzusehen.

Der zweite Fahrzeugsitz ist insbesondere der Fahrersitz. Dies wiederum bedeutet, dass der zweite Nutzer der Fahrer ist. Eine Anzeigeeinheit, die nur dem Fahrersitz zugeordnet ist, ist insbesondere eine Anzeigeeinheit im Kombinationsinstrument des Fahrzeugs oder ein auf der Fahrerseite angeordnetes Head-up-Display. Durch das erfindungsgemäße Verfahren wird vorteilhafterweise erreicht, dass der Fahrer Einstellungsänderungen des Parameters schnell und intuitiv wahrnehmen kann.

Insbesondere wird nach Beendigung der Nutzereingabe eine neue Einstellung auf der ersten Anzeigeeinheit angezeigt. Dadurch wird die neue Einstellung allen Fahrzeuginsassen angezeigt.

In einer Ausgestaltung wird auf der zweiten Anzeigeeinheit in einem ersten Anzeigemodus ein Anzeigeelement angezeigt, welches eine Skala umfasst, mittels welcher eine Zustandsgröße des Fahrzeugs angezeigt wird. Die zweite Anzeigeeinheit wechselt in einen zweiten Anzeigemodus, wenn eine Bedienabsicht des zweiten Nutzers und/oder eine Nutzereingabe des zweiten Nutzers erfasst wird. Dabei wird das Anzeigeelement in einen ersten und einen zweiten Bereich geteilt, wobei die Skala in dem ersten Bereich angezeigt wird und in dem zweiten Bereich ein dem Parameter zugeordnetes graphisches Element angezeigt wird.

Das Anzeigeelement stellt im ersten Anzeigemodus insbesondere eine Geschwindigkeits- oder Drehzahlanzeige bereit. Eine Geschwindigkeits- oder Drehzahlanzeige wird im Allgemeinen im Kombinationsinstrument eines Fahrzeugs angezeigt. Es ist also vorteilhafterweise kein gesondertes Anzeigeelement für die Anzeige der Veränderung der ersten Einstellung des Parameters notwendig. Vielmehr kann die Anzeige zur Veränderung der ersten Einstellung des Parameters in ein bereits vorhandenes Anzeigeelement integriert werden.

In einer Ausgestaltung des erfindungsgemäßen Verfahrens umfasst die Fahrzeugfunktion mehrere einstellbare Parameter. In dem ersten Bereich wird für jeden Parameter zumindest ein auswählbares graphisches Element angezeigt. Es wird eine erste Bedienaktion erfasst, mit der einer der mehreren Parameter über die graphischen Elemente ausgewählt wird. Weiterhin wird eine zweite Bedienaktion erfasst, mit der die erste Einstellung des ausgewählten Parameters verändert wird. Dadurch ist eine einfache Bedienung auch durch ein einziges Bedienelement, das insbesondere eine berührungsempfindliche Oberfläche umfasst, bedienbar. Dies reduziert den im Innenraum des Fahrzeugs benötigten Bauraum. Dabei kann die erste Bedienaktion beispielsweise eine Wischgeste auf einer ersten berührungsempfindlichen Oberfläche des Bedienelements und die zweite Bedienaktion eine Wischgeste auf einer zweiten berührungsempfindlichen Oberfläche des Bedienelements sein. Alternativ können die unterschiedlichen Bedienaktionen auch auf einer einzigen berührungsempfindlichen Oberfläche ausgeführt werden.

In einer weiteren Ausgestaltung des erfindungsgemäßen Verfahrens wird in einer ersten Phase der Nutzereingabe erfasst, dass ein graphisches Element ausgewählt wird, woraufhin der zweite Bereich in einen dritten Bereich und einen vierten Bereich geteilt wird. Dabei wird in dem dritten Bereich das graphische Element für den ausgewählten Parameter hervorgehoben dargestellt. In dem vierten Bereich wird die erste Einstellung des ausgewählten Parameters angezeigt. Durch die Unterteilung des Anzeigeelements in den dritten und vierten Bereich wird vorteilhafterweise eine intuitive und klare Anzeige für die erste Einstellung des Parameters bereitgestellt.

Insbesondere ist die erste Einstellung des Parameters der Wert des Parameters. Der Wert wird dadurch angezeigt, dass ein Abschnitt des vierten Bereichs hervorgehoben dargestellt wird, wobei die Größe des hervorgehoben dargestellten vierten Bereichs von dem ersten Wert des Parameters abhängt. Die Nutzereingabe umfasst in einer zweiten Phase eine Bewegung eines Betätigungselements in eine Richtung, wobei die Richtung und die Dauer der Bewegung erfasst wird. Die Veränderung des Werts wird dadurch angezeigt, dass die Größe des hervorgehoben dargestellten Abschnitts des vierten Bereichs in Abhängigkeit von der Richtung und der Dauer der Bewegung des Betätigungselements verändert wird.

Insbesondere wird der hervorgehoben dargestellte Abschnitt des vierten Bereichs farblich hervorgehoben. Dabei wird die farbliche Auffüllung des Abschnitts der Bewegung des Betätigungselements nachgeführt. Wird also der Wert erniedrigt, wird der hervorgehoben dargestellte Abschnitt kleiner. Wird der Wert erhöht, wird der hervorgehoben dargestellte Abschnitt größer. Dadurch wird dem Fahrer auf einfache und intuitive Weise die Veränderung des Werts dargestellt.

Bevorzugt weist das Anzeigeelement eine im Wesentlichen kreisförmige Begrenzung auf, wobei der erste, zweite, dritte und/oder vierte Bereich innerhalb der kreisförmigen Begrenzung angezeigt wird und wobei der erste Bereich ein Innenring, der zweite Bereich ein erster Außenring, der dritte Bereich ein Mittelring und/oder der vierte Bereich ein zweiter Außenring ist. Geschwindigkeits- und/oder Drehzahlanzeigen werden in der Regel in einem von einem Kreis begrenzten Bereich des Kombinationsinstrument angezeigt. Es ist daher besonders vorteilhaft, die unterschiedlichen Bereiche als Ringe auszubilden.

Bevorzugt wird, wenn der erste Nutzer die Nutzereingabe tätigt, während der Nutzereingabe die Veränderung der ersten Einstellung zumindest auf der ersten Anzeigeeinheit angezeigt. Wenn der erste Nutzer die Nutzereingabe tätigt, sollte die Veränderung der ersten Einstellung insbesondere diesem auch angezeigt werden. Daher wird die Veränderung insbesondere auf der ersten Anzeigeeinheit angezeigt. Zusätzlich kann die Veränderung auch auf der zweiten Anzeigeeinheit nach dem vorhergehend beschriebenen Verfahren angezeigt werden. Dadurch kann dem Fahrer die Veränderung der ersten Einstellung durch den Beifahrer im Kombinationsinstrument oder in einem Head-up Display angezeigt werden.

Insbesondere wird in einem ersten Anzeigemodus auf der ersten Anzeigeeinheit ein Menü angezeigt. Die erste Anzeigeeinheit wechselt in einen zweiten Anzeigemodus, wenn eine Bedienabsicht des ersten Nutzers und/oder die Nutzereingabe des ersten Nutzers erfasst wird. An Stelle des Menüs wird dann ein längliches Element angezeigt. Die erste Einstellung ist insbesondere ein Wert des Parameters, wobei der Wert des Parameters durch eine Länge des länglichen Elements dargestellt wird. Dadurch wird auf sehr einfache und intuitive Weise angezeigt, dass eine Veränderung vorgenommen wird.

Insbesondere ist die Nutzereingabe des ersten Nutzers eine Bewegung eines Betätigungselements in eine Richtung, wobei die Richtung und die Dauer der Bewegung erfasst wird, und in Abhängigkeit von der Richtung und der Dauer der Bewegung die Länge des länglichen Elements verändert wird. Dadurch kann der Fahrer, auch wenn die Veränderung nur auf der ersten Anzeigeeinheit angezeigt wird, einfach und intuitiv erfassen, welche Art von Einstellungsveränderung der Beifahrer vornimmt. Insbesondere kann der Fahrer schnell erfassen, ob der Beifahrer einen Wert eines Parameters erhöht oder erniedrigt.

Ferner betrifft die Erfindung eine Vorrichtung zum Anzeigen einer Veränderung einer Einstellung zumindest eines Parameters einer Fahrzeugfunktion. Die Vorrichtung umfasst eine mehreren Fahrzeugsitzen zugeordnete erste Anzeigeeinheit, wobei auf der ersten Anzeigeeinheit eine erste Einstellung des Parameters anzeigbar ist. Ferner umfasst die Vorrichtung eine Identifikationseinheit, mit der ermittelbar ist, ob ein erster Nutzer oder ein zweiter Nutzer eine Nutzereingabe tätigt, wobei der erste Nutzer einem ersten Fahrzeugsitz und der zweite Nutzer einem zweiten Fahrzeugsitz zugeordnet ist. Weiterhin umfasst die Vorrichtung eine zweite Anzeigeeinheit, die nur dem zweiten Fahrzeugsitz zugeordnet ist. Schließlich umfasst die Vorrichtung eine Steuereinheit, mittels der die zweite Anzeigeeinheit ansteuerbar ist, wenn ermittelt wird, dass der zweite Nutzer die Nutzereingabe tätigt, wobei die zweite Anzeigeeinheit derart ansteuerbar ist, dass während der Nutzereingabe die Veränderung der ersten Einstellung auf der zweiten Anzeigeeinheit anzeigbar ist. Die Vorrichtung ist erfindungsgemäß dadurch gekennzeichnet, dass die Fahrzeugfunktion eine Klimafunktion ist und der Parameter eine Innenraumtemperatur und/oder eine Belüftungsstärke ist. Die erfindungsgemäße
Vorrichtung ist insbesondere zum Ausführen des erfindungsgemäßen Verfahrens geeignet und weist daher alle Vorteile des Verfahrens auf.

Insbesondere ist die erste Anzeigeeinheit in einer Mittelkonsole des Fahrzeugs und die zweite Anzeigeeinheit in einem Kombinationsinstrument des Fahrzeugs oder einem Head-up-Display angeordnet.

Bevorzugt ist mittels der Identifikationseinheit eine Bedienabsicht seitens des ersten oder des zweiten Nutzers erfassbar.

Ferner umfasst die Erfindung ein Fahrzeug mit einer erfindungsgemäßen Vorrichtung. Im Folgenden wird die Erfindung anhand von Ausführungsbeispielen mit Bezug zu den Zeichnungen erläutert.
Figur 1 zeigt ein Ausführungsbeispiel der erfindungsgemäßen Vorrichtung,
Figur 2 zeigt eine Anordnung der erfindungsgemäßen Vorrichtung aus Figur 1 in einem Fahrzeug,
Figur 3 zeigt ein Flussdiagramm für ein erstes Ausführungsbeispiel des erfindungsgemäßen Verfahrens,
Figuren 4a bis 4d zeigen Anzeigen auf der Anzeigeeinheit für ein erstes Ausführungsbeispiel des erfindungsgemäßen Verfahrens,
Figuren 5a und 5b zeigen Anzeigen auf der Anzeigeeinheit für ein zweites Ausführungsbeispiel des erfindungsgemäßen Verfahrens und

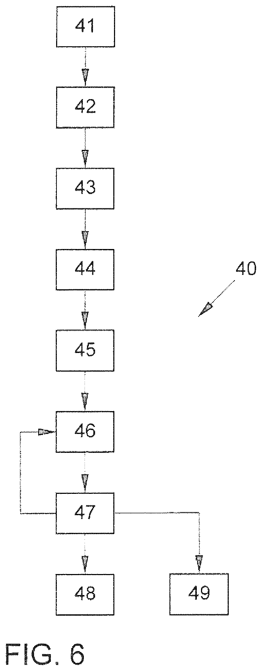

Figur 6 zeigt ein Flussdiagramm für das zweite Ausführungsbeispiel des erfindungsgemäßen Verfahrens.

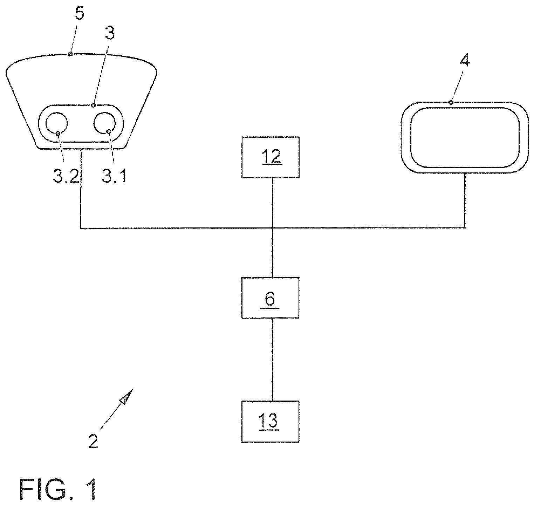

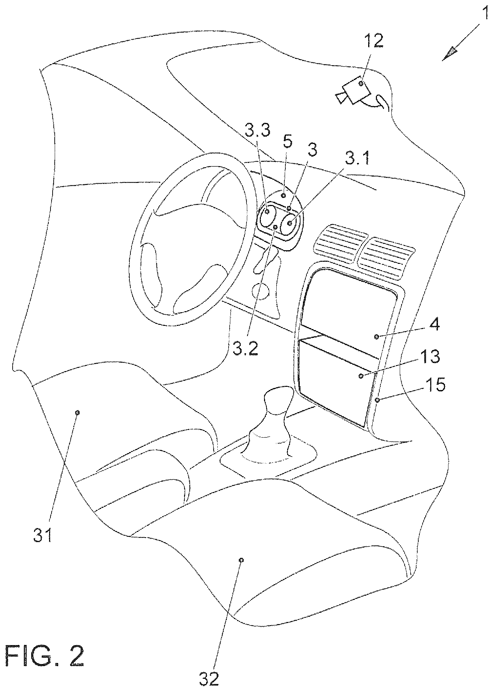

Mit Bezug zu den Figuren 1 und 2 wird ein Ausführungsbeispiel einer erfindungsgemäßen Vorrichtung 2 sowie eine Anordnung der Vorrichtung 2 in einem Fahrzeug 1 erläutert. Die erfindungsgemäße Vorrichtung 2 umfasst eine erste Anzeigeeinheit 4, die in der Mittelkonsole 15 des Fahrzeugs 1 angeordnet ist, und eine zweite Anzeigeeinheit 3, die im Kombinationsinstrument 5 des Fahrzeugs 1 angeordnet ist.

Die zweite Anzeigeeinheit 3 weist zwei Anzeigeelemente 3.1 und 3.2 auf, die eine Geschwindigkeitsanzeige und eine Drehzahlanzeige darstellen.

Weiterhin umfasst die Vorrichtung 2 eine Identifikationseinheit 12. Die Identifikationseinheit 12 umfasst eine Kamera. Die Identifikationseinheit 12 kann dabei über Mustererkennung einen ersten Nutzer einem ersten Fahrzeugsitz 32 und einen zweiten Nutzer einem zweiten Fahrzeugsitz 31 zuordnen. Der erste Fahrzeugsitz 32 ist dabei insbesondere der Beifahrersitz. Der erste Nutzer ist daher der Beifahrer. Der zweite Fahrzeugsitz 31 ist insbesondere der Fahrersitz. Der zweite Nutzer ist daher insbesondere der Fahrer. Weiterhin kann die Identifikationseinheit 12 ermitteln, ob der Fahrer oder der Beifahrer eine Bedienabsicht hat, oder ob der Fahrer oder der Beifahrer eine Nutzereingabe tätigt. Wer die Nutzereingabe tätigt oder die Bedienabsicht hat, wird insbesondere über ein Verfahren, wie es in der DE 10 2008 019 731 A1 beschrieben ist, bestimmt, die hiermit in vollem Umfang durch Bezugnahme in die vorliegende Anmeldung aufgenommen wird.

Die Vorrichtung 2 umfasst ebenfalls eine Steuereinheit 6, mit der die Anzeigeeinheiten 3 und 4 in Abhängigkeit davon, ob die Identifikationseinheit 12 ermittelt hat, dass der Fahrer oder der Beifahrer eine Bedienabsicht hat oder eine Nutzereingabe tätigt, ansteuerbar sind.
Die Vorrichtung 2 umfasst ferner ein Bedienelement 13. Über das Bedienelement 13 kann eine Fahrzeugfunktion, die zumindest einen Paramater aufweist, bedient werden. Auf dem Bedienelement 13, dass insbesondere eine berührungsempfindliche Oberfläche aufweist, können mehrere Bedienaktionen ausgeführt werden. Eine erste Bedienaktion ist beispielsweise eine erste Wischgeste und eine zweite Bedienaktion ist beispielsweise ein Tippen auf die berührungsempfindliche Oberfläche mit einer darauffolgenden Wischgeste. Das Tippen auf die berührungsempfindliche Oberfläche kann dabei eine erste Phase der zweiten Bedienaktion und die Wischgeste eine zweite Phase der zweiten Bedienaktion darstellen.

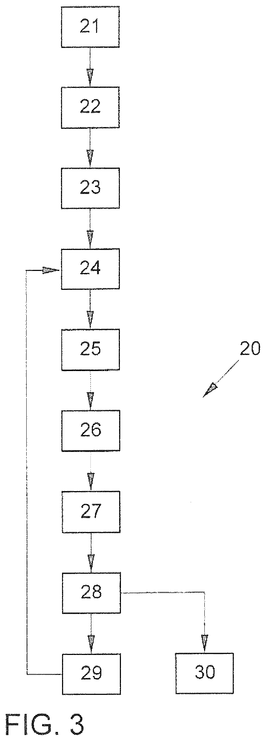

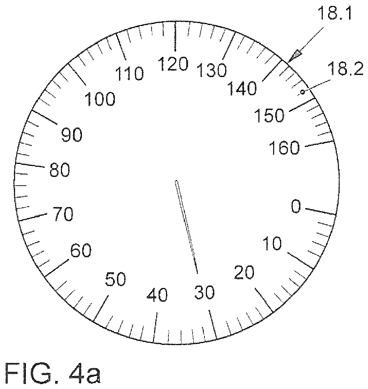

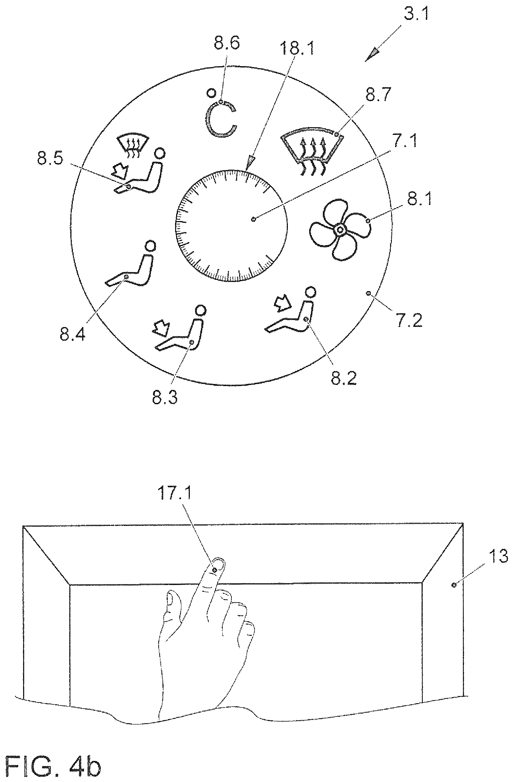

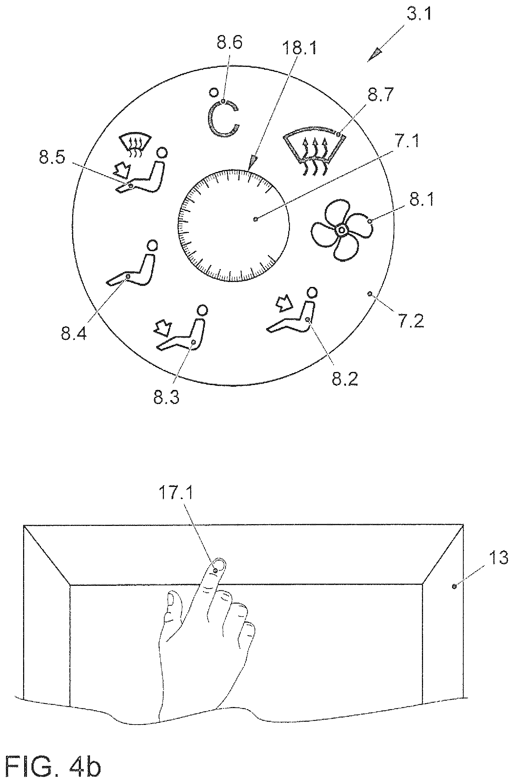

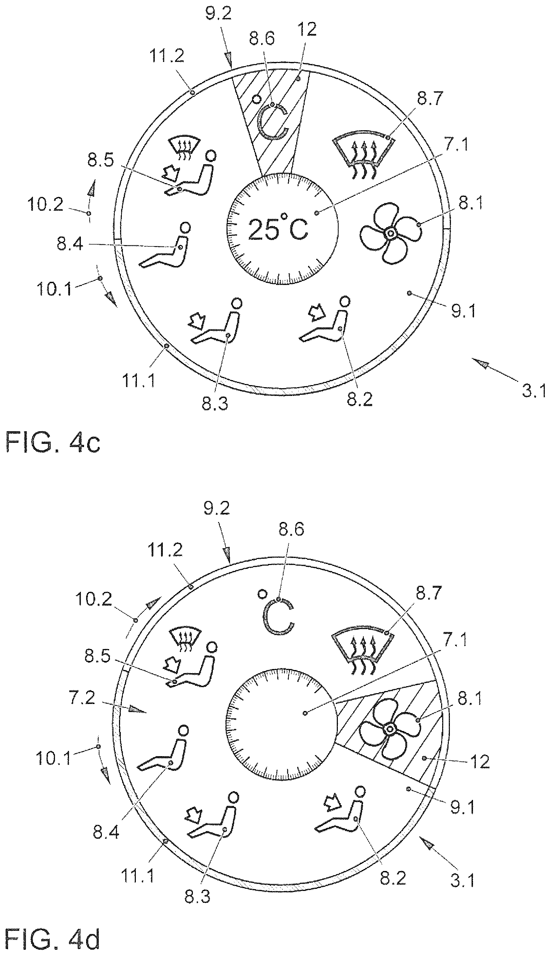

Mit Bezug zu den Figuren 3, 4a, 4b, 4c und 4d wird ein erstes Ausführungsbeispiel des erfindungsgemäßen Verfahrens erläutert. Figur 4a zeigt dabei die Anzeige in einem ersten Anzeigemodus der zweiten Anzeigeeinheit 3. Der erste Anzeigemodus umfasst dabei insbesondere die Anzeige, wenn keine Veränderung der Einstellung des Parameters vorgenommen wird. Das Anzeigeelement 3.1 ist im ersten Anzeigemodus eine Geschwindigkeitsanzeige, die eine im Wesentlichen kreisförmige Begrenzung 18.1 und eine Skala 18.2 aufweist.

Die Fahrzeugfunktion ist eine Klimafunktion, die drei Parameter aufweist. Der erste Parameter ist die Innenraumtemperatur, ein zweiter Parameter ist die Belüftungsstärke und ein dritter Parameter eine Luftverteilung.

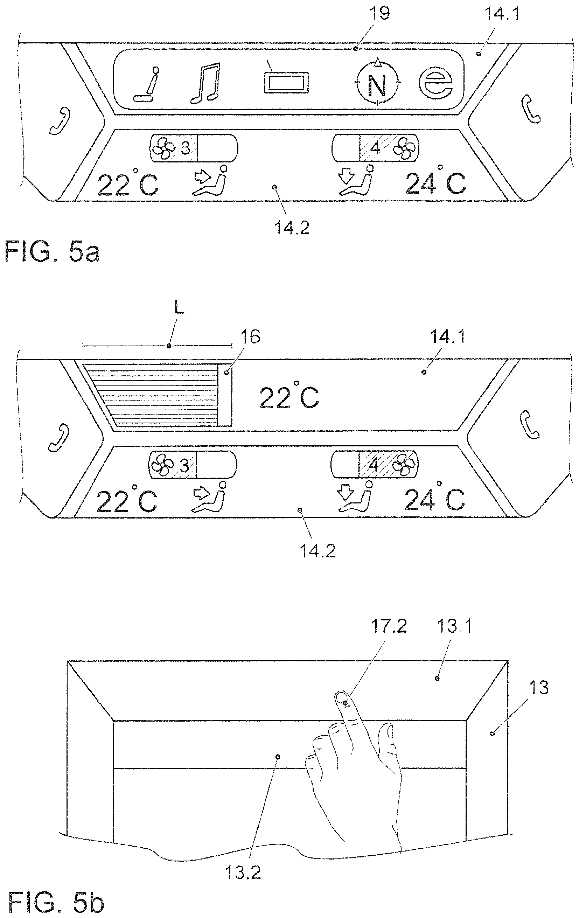

Die erste Anzeigeeinheit 4 in der Mittelkonsole 15 des Fahrzeugs 1 zeigt in einem ersten Anzeigemodus ein erstes Anzeigefeld 14.1 mit einem Menü 19 und in einem zweiten Anzeigefeld 14.2 erste Einstellungen der Parameter der Klimafunktion. Dies ist in Figur 5a gezeigt. Die ersten Einstellungen der Klimafunktion sind die Ausgangseinstellungen für das erste Ausführungsbeispiel des erfindungsgemäßen Verfahrens.

Im Schritt 21 des Verfahrens 20 erkennt die Identifikationseinheit 12 zunächst, dass eine Bedienabsicht vorliegt.

Im Schritt 22 ermittelt die Identifikationseinheit 12, beispielsweise über ein Mustererkennungsverfahren, ob der Fahrer oder der Beifahrer die Bedienabsicht hat. Im vorliegenden Beispiel wird der Fahrer als Nutzer mit Bedienabsicht ermittelt. Eine Bedienabsicht
kann dabei bereits dann erkannt werden, wenn der Fahrer seine Hand oder seinen Finger 17.1 dem Bedienelement 13 annähert.

Die Identifikationseinheit 12 übermittelt in Schritt 23 an die Steuereinheit 6, dass die zweite Anzeigeeinheit 3 im Kombinationsinstrument 5 des Fahrzeugs 1 angesteuert werden soll. In Schritt 24 wechselt die zweite Anzeigeeinheit 3 in einen zweiten Anzeigemodus. Im zweiten Anzeigemodus wird die zweite Anzeigeeinheit 3 derart angesteuert, dass das Anzeigeelement 3.1 in einen Innenring 7.1 bzw. eine Innenscheibe und einen ersten Außenring 7.2 geteilt wird.

Die Skala 18.2, die anfänglich am Umfang der kreisförmigen Begrenzung 18.1 angezeigt wurde, wird nun im ersten Innenring 7.1 angezeigt. Der Fahrer kann also weiterhin die gefahrene Geschwindigkeit überwachen. In dem ersten Außenring 7.2 erscheinen sieben graphische Elemente 8.1 bis 8.7. Das graphische Element 8.1 stellt den Parameter Belüftungsstärke dar.

Die graphischen Elemente 8.2 bis 8.5 sowie das graphische Element 8.7 stellen den Parameter Luftverteilung dar. Das graphische Element 8.6 stellt den Parameter Innenraumtemperatur dar. Die Anzeige ist in Figur 4b dargestellt.

Bis jetzt hat der Fahrer noch keine Nutzereingabe getätigt, sondern lediglich eine Bedienabsicht.

Der Fahrer legt nun seinen Finger 17.1 auf das Bedienelement 13 und führt eine Wischgeste nach rechts auf dem Bedienelement 13 aus.

In Schritt 25 wird zunächst die Richtung der Bewegung ermittelt. Die Bewegung nach rechts ist dabei mit einer Bewegung einer Markierung 12 im Uhrzeigersinn über die graphischen Elemente 8.1 bis 8.7 verbunden. Die Markierung 12 "hüpft" im Uhrzeigersinn über die graphischen Elemente 8.1 bis 8.7, so lange bis der Fahrer das gewünschte graphische Element 8.6 erreicht hat. Bei einer Wischgeste nach links, würde die Markierung 12 in einer Bewegung entgegen dem Uhrzeigersinn über die graphischen Elemente 8.1 bis 8.7 "hüpfen". Im vorliegenden Beispiel möchte der Fahrer den Wert der Innenraumtemperatur erhöhen. Der Fahrer stoppt die Wischgeste, wenn die Markierung 12 das graphische Element 8.6 erreicht hat.

Die Wischgeste, mit der das graphische Element 8.6 ausgewählt wird, stellt dabei eine erste Bedienaktion dar.

Durch Tippen auf das Bedienelement 13 initiiert der Fahrer mit seinem Finger 17.1 eine zweite Bedienaktion.

Das Tippen wird in Schritt 26 als erste Phase der zweiten Bedienaktion erkannt. Dadurch wird das graphische Element 8.6 ausgewählt. Der erste Außenring 7.2 wird daraufhin in einen Mittelring 9.1 und einen zweiten Außenring 9.2 geteilt. Dabei sind im Mittelring 9.1 die graphischen Elemente 8.1 bis 8.7 angezeigt. Der zweite Außenring 9.2 hingegen stellt den momentanen Wert der Temperatur dar, wie er auch auf der zweiten Anzeigeeinheit 4 angezeigt wird. Dazu wird der zweite Außenring 9.2 in zwei Abschnitte 11.1 und 11.2 geteilt.

Die Größe des ersten Abschnitts 11.1, der durch farbliche Hervorhebung dargestellt wird, stellt dabei den Wert der Temperatur dar. Der zweite Abschnitt 11.2 wird nicht farblich hervorgehoben.

Führt der Fahrer nun wieder eine Wischgeste mit seinem Finger 17.1 auf dem Bedienelement 13 aus, wird dies in Schritt 27 als zweite Phase der zweiten Bedienaktion erkannt. Weiterhin wird die Richtung der Bewegung ermittelt. Dabei ist eine Wischgeste nach rechts damit verbunden, dass der zweite Außenring 9.2 im Uhrzeigersinn farblich aufgefüllt wird. Zudem wird die Dauer der Wischgeste ermittelt. Der erste Abschnitt 11.1 wird dadurch in Richtung des Pfeils

10.2 vergrößert. Gleichzeitig kann ein numerischer Wert der Innenraumtemperatur im Innenring 7.1 angezeigt werden.

Eine Wischgeste nach links wäre damit verbunden, dass der erste Abschnitt 11.1 in Richtung des Pfeils 10.1 verkleinert würde. Dies bedeutet gleichzeitig, dass der zweite Abschnitt 11.2, der nicht farblich hervorgehoben wird, vergrößert wird. Das Ausmaß der Verkleinerung ist dabei ebenso abhängig von der Dauer der Bewegung.

### Die Vergrößerung bzw. Verkleinerung des ersten Abschnitts 11.1 kann dabei in einer fließenden

Animation dargestellt werden, so dass sich eine Bewegung des Fingers 17.1 des Fahrers auf dem Bedienelement 13 nahezu zeitgleich in einer Veränderung der Größe des ersten Abschnitts 11.1 auswirkt.

Gleichzeitig wird die Temperatur im Innenraum des Fahrzeugs erhöht bzw. erniedrigt. In Schritt 28 des Verfahrens wird die erste Anzeigeeinheit 4 in der Mittelkonsole 15 angesteuert. Der nun eingestellte Wert der Innenraumtemperatur wird auf der Anzeigeeinheit 4 angezeigt. Tätigt der Fahrer innerhalb eines vorbestimmten Zeitintervalls, das beispielsweise in einem Bereich von 1 Sekunde bis 5 Sekunden liegt, keine weitere Nutzereingabe, wird das Verfahren in Schritt 30 beendet.

Möchte der Fahrer jedoch noch die Belüftungsstärke einstellen, tippt er wieder auf das Bedienelement 13. In Schritt 29 verschwindet dann zunächst der zweite Außenring 9.2 wieder von der Anzeige. Der Mittelring 9.1 geht wieder in den ersten Außenring 7.2 über. Dies ist in Figur 4d gezeigt. Das Verfahren geht wieder in Schritt 24 über, in dem der Parameter Belüftungsstärke über das graphische Element 8.1 ausgewählt wird. Dann läuft das Verfahren analog zu den Schritten 25, 26, 27 und 28, wie bereits für die Innenraumtemperatur erläutert, ab.

Die Luftverteilung weist keinen numerischen Wert auf, der eingestellt werden kann. Vielmehr wird durch eine Luftverteilungseinstellung eingestellt, welche Gebläsevorrichtungen angesteuert werden. Dies kann bereits durch Auswählen eines entsprechenden graphischen Elements erreicht werden.

Mit Bezug zu den Figuren 5a und 5b wird ein zweites Ausführungsbeispiel des erfindungsgemäßen Verfahrens 40, bei dem der Beifahrer die Nutzereingabe tätigt, erläutert:
In diesem Fall umfasst das Bedienelement 13 für jeden einstellbaren Parameter eine separate berührungsempfindliche Oberfläche, nämlich zwei berührungsempfindliche Oberflächen 13.1 und 13.2. Dabei ist die erste berührungsempfindliche Oberfläche 13.1 dem Parameter Innenraumtemperatur zugeordnet und die zweite berührungsempfindliche Oberfläche 13.2 dem Parameter Belüftungsstärke zugeordnet.

Die erste Anzeigeeinheit 4 in der Mittelkonsole 15 des Fahrzeugs 1 zeigt dabei in einem ersten Anzeigemodus ein erstes Anzeigefeld 14.1 mit einem Menü 19 und ein zweites Anzeigefeld 14.2 mit ersten Einstellungen der Parameter Innenraumtemperatur und Belüftungsstärke. Die ersten Einstellungen der Klimafunktion sind die Ausgangseinstellungen für das zweite Ausführungsbeispiel des erfindungsgemäßen Verfahrens 40.

Die Schritte 41 und 42 des Verfahrens 40 entsprechen dabei den Schritten 21 und 22 des Verfahrens 20. Es wird jedoch ermittelt, dass der Beifahrer eine Bedienabsicht hat. Die Identifikationseinheit 12 übermittelt in Schritt 43 an die Steuereinheit 6, dass die erste Anzeigeeinheit 4 in der Mittelkonsole 15 des Fahrzeugs 1 angesteuert werden soll. In Schritt 44 wird ermittelt, ob der Beifahrer eine Bedienabsicht auf der ersten 13.1 oder der zweiten berührungsempfindlichen Oberfläche 13.2 des Bedienelements 13 hat. Im vorliegenden Beispiel möchte der Beifahrer zunächst die Innenraumtemperatur einstellen. Er hat also eine Bedienabsicht für die erste berührungsempfindliche Oberfläche 13.1.

In Schritt 45 wechselt die Anzeigeeinheit 4 von dem ersten Anzeigemodus in einen zweiten Anzeigemodus. Der einzustellende Parameter wird dabei darüber ausgewählt, dass die berührungsempfindliche Oberfläche 13.1, auf der die Nutzereingabe getätigt wird, ausgewählt wird. Im zweiten Anzeigemodus wird das im ersten Anzeigefeld 14.1 angezeigte Menü 19 durch ein längliches Element 16 ersetzt. Die Länge L des länglichen Elements 16 entspricht dabei dem Wert der ersten Einstellung der Innenraumtemperatur.

Führt der Beifahrer eine Wischgeste mit seinem Finger 17.2 auf der ersten berührungsempfindlichen Oberfläche 13.1 aus, wird in Schritt 46 die Länge L des länglichen Elements 16 verändert. Will der Beifahrer die Innenraumtemperatur erhöhen, führt er eine Wischgeste nach rechts aus. Die Länge L des länglichen Elements 16 wird in Abhängigkeit von der Dauer und der Richtung der Wischgeste vergrößert. Führt der Beifahrer eine Wischgeste nach links aus, wird die Länge L des länglichen Elements 16 verkleinert. Je länger die Wischgeste dabei dauert, desto kürzer wird das längliche Element 16.
Tätigt der Fahrer innerhalb eines vorbestimmten Zeitintervalls, das beispielsweise in einem Bereich von 1 Sekunde bis 5 Sekunden liegt, keine weitere Nutzereingabe, wird das Verfahren in Schritt 49 beendet.

Möchte der Beifahrer jedoch noch die Belüftungsstärke verändern, legt er seinen Finger 17.2 auf die zweite berührungsempfindliche Oberfläche 13.2. In Schritt 48 wird die Länge L des länglichen Elements 16 an die erste Einstellung der Belüftungsstärke angepasst. Dabei kann das längliche Element 16 dann in einer anderen Farbe dargestellt werden, um den Beifahrer und dem Fahrer zu verdeutlichen, dass nun ein anderer Parameter eingestellt wird. Das Verfahren fährt mit Schritt 46 fort, in dem die Länge L des länglichen Elements 16 an die Einstellungen des Beifahrers angepasst wird.

Alternativ kann die Luftverteilung über eine dritte berührungsempfindliche Oberfläche durch Auswählen eines graphischen Elements eingestellt werden.

Alternativ können auch im Verfahren 20 die Parameter über unterschiedliche berührungsempfindliche Oberflächen ausgewählt werden. Auch können in Verfahren 40 die Parameter über unterschiedliche Bedienaktionen eingestellt werden.

### Bezugszeichenliste

- 1: Fahrzeug
- 2: Vorrichtung
- 3: zweite Anzeigeeinheit
- 3.1, 3.2: Anzeigeelemente
- 4: erste Anzeigeeinheit
- 5: Kombinationsinstrument
- 6: Steuereinheit
- 7.1: Innenring
- 7.2: erster Außenring
- 8.1 - 8.7: graphische Elemente
- 9.1: Mittelring
- 9.2: zweite Außenring
- 10.1, 10.2: Bewegungsrichtung
- 11.1, 11.2: Abschnitte des zweiten Außenrings
- 12: Identifikationseinheit
- 13: Bedienelement
- 14.1: erstes Anzeigefeld
- 14.2: zweites Anzeigefeld
- 15: Mittelkonsole
- 16: längliches Element
- 17.1: Finger des Fahrers
- 17.2: Finger des Beifahrers
- 18.1: kreisförmige Begrenzung
- 18.2: Skala
- 19: Menü
- 20, 40: Verfahren
- 21 - 30: Verfahrensschritte Verfahren 20
- 31: Fahrersitz
- 32: Beifahrersitz
- 41 - 49: Verfahrensschritte Verfahren 40
- L: Länge des länglichen Elements

## Patentansprüche

1. Verfahren zum Anzeigen einer Veränderung einer Einstellung zumindest eines Parameters einer Fahrzeugfunktion, bei dem
eine erste Einstellung des Parameters auf einer mehreren Fahrzeugsitzen (31, 32) zugeordneten ersten Anzeigeeinheit (4) angezeigt wird,
ermittelt wird, ob ein erster Nutzer oder ein zweiter Nutzer eine Nutzereingabe zum Verändern der ersten Einstellung des Parameters tätigt, wobei der erste Nutzer einem ersten Fahrzeugsitz (32) und der zweite Nutzer einem zweiten Fahrzeugsitz (31) zugeordnet wird, und,
wenn ermittelt worden ist, dass der zweite Nutzer die Nutzereingabe tätigt, während der Nutzereingabe die Veränderung der ersten Einstellung auf einer zweiten Anzeigeeinheit (3), die nur dem zweiten Fahrzeugsitz (31) zugeordnet ist, angezeigt wird,
**dadurch gekennzeichnet, dass**
die Fahrzeugfunktion eine Klimafunktion ist und der Parameter eine Innenraumtemperatur oder eine Belüftungsstärke ist.

2. Verfahren nach Anspruch 1,
**dadurch gekennzeichnet, dass**
nach Beendigung der Nutzereingabe eine neue Einstellung auf der ersten Anzeigeeinheit (4) angezeigt wird.

3. Verfahren nach Anspruch 1 oder 2,
**dadurch gekennzeichnet, dass**
auf der zweiten Anzeigeeinheit (3) in einem ersten Anzeigemodus ein Anzeigeelement (3.1) angezeigt wird, welches eine Skala umfasst, mittels welcher eine Zustandsgröße des Fahrzeugs (1) angezeigt wird, und
die zweite Anzeigeeinheit (3) in einen zweiten Anzeigemodus wechselt, wenn eine Bedienabsicht des zweiten Nutzers und/oder eine Nutzereingabe des zweiten Nutzers erfasst wird, wobei das Anzeigeelement (3.1) im zweiten Anzeigemodus in einen ersten (7.1) und einen zweiten Bereich (7.2) geteilt wird, wobei die Skala in dem ersten Bereich (7.1) angezeigt wird und in dem zweiten Bereich (7.2) ein dem Parameter zugeordnetes graphisches Element (8.1 - 8.7) angezeigt wird.

4. Verfahren nach Anspruch 3,
**dadurch gekennzeichnet, dass**
die Fahrzeugfunktion mehrere einstellbare Parameter umfasst,
in dem ersten Bereich (7.1) für jeden Parameter zumindest ein auswählbares graphisches Element (8.1 - 8.7) angezeigt wird,
eine erste Bedienaktion erfasst wird, mit der einer der mehreren Parameter über die graphischen Elemente (8.1 - 8.7) ausgewählt wird, und
eine zweite Bedienaktion erfasst wird, mit der die erste Einstellung des ausgewählten Parameters verändert wird.

5. Verfahren nach Anspruch 3 oder 4,
**dadurch gekennzeichnet, dass**
in einer ersten Phase der Nutzereingabe erfasst wird, dass ein graphisches Element (8.1 - 8.7) ausgewählt wird, woraufhin der zweite Bereich (7.2) in einen dritten Bereich (9.1) und einen vierten Bereich (9.2) geteilt wird, wobei in dem dritten Bereich (9.1) das graphische Element (8.1 - 8.7) für den ausgewählten Parameter hervorgehoben dargestellt wird und in dem vierten Bereich (9.2) die erste Einstellung des ausgewählten Parameters angezeigt wird.

6. Verfahren nach Anspruch 5,
**dadurch gekennzeichnet, dass**
die erste Einstellung des Parameters der Wert des Parameters ist,
der Wert dadurch angezeigt wird, dass ein Abschnitt (11.1) des vierten Bereichs (9.2) hervorgehoben dargestellt wird, wobei die Größe des hervorgehoben dargestellten Abschnitts (11.1) von dem ersten Wert des Parameters abhängt,
die Nutzereingabe in einer zweiten Phase eine Bewegung eines Betätigungselements (17.1) in eine Richtung umfasst, wobei die Richtung und die Dauer der Bewegung erfasst wird, und
die Veränderung des Werts dadurch angezeigt wird, dass die Größe des hervorgehoben dargestellten Abschnitts (11.1) des vierten Bereichs (9.2) in Abhängigkeit von der Richtung und der Dauer der Bewegung des Betätigungselements (17.1) verändert wird.

7. Verfahren nach einem der Ansprüche 3 bis 6,
**dadurch gekennzeichnet, dass**
das Anzeigeelement (3.1) eine im Wesentlichen kreisförmige Begrenzung aufweist, wobei der erste (7.1), zweite (7.2), dritte (9.1) und/oder vierte Bereich (9.2) innerhalb der kreisförmigen Begrenzung angezeigt werden und wobei der erste Bereich ein Innenring (7.1), der zweite Bereich ein erster Außenring (7.2), der dritte Bereich ein Mittelring (9.1) und/oder der vierte Bereich ein zweiter Außenring (9.2) ist.

8. Verfahren nach einem der vorhergehenden Ansprüche,
**dadurch gekennzeichnet, dass,**
wenn der erste Nutzer die Nutzereingabe tätigt, während der Nutzereingabe die Veränderung der ersten Einstellung zumindest auf der ersten Anzeigeeinheit (4) angezeigt wird.

9. Verfahren nach Anspruch 8,
**dadurch gekennzeichnet, dass**
in einem ersten Anzeigemodus auf der ersten Anzeigeeinheit (4) ein Menü (19) angezeigt wird,
die erste Anzeigeeinheit (4) in einen zweiten Anzeigemodus wechselt, wenn eine Bedienabsicht des ersten Nutzers und/oder die Nutzereingabe des ersten Nutzers erfasst wird,
an Stelle des Menüs (19) ein längliches Element (16) angezeigt wird, und
die erste Einstellung ein Wert des Parameters ist, wobei der Wert des Parameters durch eine Länge (L) des länglichen Elements (16) dargestellt wird.

10. Verfahren nach Anspruch 9,
**dadurch gekennzeichnet, dass**
die Nutzereingabe des ersten Nutzers eine Bewegung eines Betätigungselements (17.2) in eine Richtung ist, wobei die Richtung und die Dauer der Bewegung erfasst wird, und in Abhängigkeit von der Richtung und der Dauer der Bewegung die Länge (L) des länglichen Elements (16) verändert wird.

11. Vorrichtung (2) zum Anzeigen einer Veränderung einer Einstellung zumindest eines Parameters einer Fahrzeugfunktion, mit
einer mehreren Fahrzeugsitzen (31, 32) zugeordneten ersten Anzeigeeinheit (4), wobei auf der ersten Anzeigeeinheit (4) eine erste Einstellung des Parameters anzeigbar ist, einer Identifikationseinheit (12), mit der ermittelbar ist, ob ein erster Nutzer oder ein zweiter Nutzer eine Nutzereingabe tätigt, wobei der erste Nutzer einem ersten Fahrzeugsitz (32) und der zweite Nutzer einem zweiten Fahrzeugsitz (31) zugeordnet ist,
einer zweiten Anzeigeeinheit (3), die nur dem zweiten Fahrzeugsitz (31) zugeordnet ist, und
einer Steuereinheit (6), mittels der die zweite Anzeigeeinheit (3) ansteuerbar ist, wenn ermittelt wird, dass der zweite Nutzer die Nutzereingabe tätigt, wobei die zweite Anzeigeeinheit (3) derart ansteuerbar ist, dass während der Nutzereingabe die Veränderung der ersten Einstellung auf der zweiten Anzeigeeinheit (3) anzeigbar ist,
**dadurch gekennzeichnet, dass**
die Fahrzeugfunktion eine Klimafunktion ist und der Parameter eine Innenraumtemperatur oder eine Belüftungsstärke ist.

12. Vorrichtung (2) nach Anspruch 11,
**dadurch gekennzeichnet, dass**
die erste Anzeigeeinheit (4) in einer Mittelkonsole (15) des Fahrzeugs (1) und die zweite Anzeigeeinheit (3) in einem Kombinationsinstrument (5) des Fahrzeugs (1) angeordnet ist.

13. Vorrichtung (2) nach Anspruch nach Anspruch 11 oder 12,
**dadurch gekennzeichnet, dass**
mittels der Identifikationseinheit (12) eine Bedienabsicht seitens des ersten oder des zweiten Nutzers erfassbar ist.

14. Fahrzeug (1) mit einer Vorrichtung (2) nach einem der Ansprüche 11 bis 13.

## Claims

1. Method for displaying a change to a setting of at least one parameter of a vehicle function, in which a first setting of the parameter is displayed on a first display unit (4) assigned to a plurality of vehicle seats (31, 32),
it is determined whether a first user or a second user makes a user input in order to change the first setting of the parameter, wherein the first user is assigned to a first vehicle seat (32) and the second user is assigned to a second vehicle seat (31), and if it has been determined that the second user makes the user input, the change to the first setting is displayed during the user input on a second display unit (3) assigned only to the second vehicle seat (31),
**characterized in that**
the vehicle function is an air-conditioning function and the parameter is an inside temperature or a ventilation strength.

2. Method according to Claim 1,
**characterized in that**
a new setting is displayed on the first display unit (4) after the user input has been completed.

3. Method according to Claim 1 or 2,
**characterized in that**
a display element (3.1) is displayed on the second display unit (3) in a first display mode, which display element comprises a scale which is used to indicate a state variable of the vehicle (1), and the second display unit (3) changes to a second display mode if an operating intention of the second user and/or a user input by the second user is captured, wherein the display element (3.1) is divided into a first region (7.1) and a second region (7.2) in the second display mode, wherein the scale is displayed in the first region (7.1) and a graphical element (8.1-8.7) assigned to the parameter is displayed in the second region (7.2)

4. Method according to Claim 3,
**characterized in that**
the vehicle function comprises a plurality of settable parameters,
at least one selectable graphical element (8.1-8.7) is displayed for each parameter in the first region (7.1),
a first operating action which is used to select one of the plurality of parameters via the graphical elements (8.1-8.7) is captured, and
a second operating action which is used to change the first setting of the selected parameter is captured.

5. Method according to Claim 3 or 4,
**characterized in that**
in a first phase of the user input, it is captured that a graphical element (8.1-8.7) is selected, whereupon the second region (7.2) is divided into a third region (9.1) and a fourth region (9.2), wherein the graphical element (8.1-8.7) for the selected parameter is displayed in a highlighted manner in the third region (9.1) and the first setting of the selected parameter is displayed in the fourth region (9.2).

6. Method according to Claim 5,
**characterized in that**
the first setting of the parameter is the value of the parameter,
the value is displayed by displaying a section (11.1) of the fourth region (9.2) in a highlighted manner, wherein the size of the section (11.1) displayed in a highlighted manner depends on the first value of the parameter,
the user input in a second phase comprises a movement of an actuation element (17.1) in a direction, wherein the direction and the duration of the movement are captured, and
the change to the value is displayed by changing the size of that section (11.1) of the fourth region (9.2) which is displayed in a highlighted manner on the basis of the direction and the duration of the movement of the actuation element (17.1).

7. Method according to one of Claims 3 to 6,
**characterized in that**
the display element (3.1) has a substantially circular boundary, wherein the first region (7.1), the second region (7.2), the third region (9.1) and/or the fourth region (9.2) is/are displayed inside the circular boundary, and wherein the first region is an inner ring (7.1), the second region is a first outer ring (7.2), the third region is a centre ring (9.1) and/or the fourth region is a second outer ring (9.2).

8. Method according to one of the preceding claims,
**characterized in that**
if the first user makes the user input, the change to the first setting is displayed at least on the first display unit (4) during the user input.

9. Method according to Claim 8,
**characterized in that**
a menu (19) is displayed in a first display mode on the first display unit (4),
the first display unit (4) changes to a second display mode if an operating intention of the first user and/or the user input by the first user is/are captured,
an elongate element (16) is displayed instead of the menu (19), and
the first setting is a value of the parameter, wherein the value of the parameter is represented by a length (L) of the elongate element (16).

10. Method according to Claim 9,
**characterized in that**
the user input by the first user is a movement of an actuation element (17.2) in a direction, wherein the direction and the duration of the movement are captured and the length (L) of the elongate element (16) is changed on the basis of the direction and the duration of the movement.

11. Apparatus (2) for displaying a change to a setting of at least one parameter of a vehicle function, having
a first display unit (4) assigned to a plurality of vehicle seats (31, 32), wherein a first setting of the parameter can be displayed on the first display unit (4),
an identification unit (12) which can be used to determine whether a first user or a second user makes a user input, wherein the first user is assigned to a first vehicle seat (32) and the second user is assigned to a second vehicle seat (31),
a second display unit (3) which is assigned only to the second vehicle seat (31), and
a control unit (6) which can be used to control the second display unit (3) if it is determined that the second user makes the user input, wherein the second display unit (3) can be controlled in such a manner that the change to the first setting can be displayed on the second display unit (3) during the user input,
**characterized in that**
the vehicle function is an air-conditioning function and the parameter is an inside temperature or a ventilation strength.

12. Apparatus (2) according to Claim 11,
**characterized in that**
the first display unit (4) is arranged in a centre console (15) of the vehicle (1) and the second display unit (3) is arranged in a combination instrument (5) of the vehicle (1).

13. Apparatus (2) according to Claim 11 or 12,
**characterized in that**
an operating intention of the first or second user can be captured using the identification unit (12).

14. Vehicle (1) having an apparatus (2) according to one of Claims 11 to 13.

## Revendications

1. Procédé d'affichage d'une modification d'un réglage d'au moins un paramètre d'une fonction de véhicule, selon lequel
un premier réglage du paramètre est affiché sur une première unité d'affichage (4) associé à plusieurs sièges de véhicule (31, 32),
il est déterminé si un premier utilisateur ou un deuxième utilisateur actionne un élément de saisie d'utilisateur en vue de modifier le premier réglage du paramètre, le premier utilisateur étant associé à un premier siège de véhicule (32) et le deuxième utilisateur étant associé à un deuxième siège de véhicule (31), et
lorsqu'il a été déterminé que le deuxième utilisateur actionne l'élément de saisie d'utilisateur, la modification du premier réglage est affichée pendant la saisie d'utilisateur sur une deuxième unité d'affichage (3) qui est uniquement associée au deuxième siège de véhicule (31),
**caractérisé en ce que**
la fonction de véhicule est une fonction de climatisation et le paramètre est une température d'habitacle ou une intensité de ventilation.

2. Procédé selon la revendication 1, **caractérisé en ce qu'**après avoir terminé la saisie d'utilisateur, un nouveau réglage est affiché sur la première unité d'affichage (4).

3. Procédé selon la revendication 1 ou 2,
**caractérisé en ce que**
dans un premier mode d'affichage, un élément d'affichage (3.1) est affiché sur la deuxième unité d'affichage (3), lequel comporte une graduation au moyen de laquelle est indiquée une grandeur d'état du véhicule (1), et
la deuxième unité d'affichage (3) passe dans un deuxième mode d'affichage lorsqu'une intention d'utilisation du deuxième utilisateur et/ou une saisie d'utilisateur du deuxième utilisateur sont détectées, l'élément d'affichage (3.1) dans le deuxième mode d'affichage étant divisé en une première (7.1) et une deuxième zone (7.2), la graduation étant affichée dans la première zone (7.1) et un élément graphique (8.1 - 8.7) associé au paramètre étant affiché dans la deuxième zone (7.2).

4. Procédé selon la revendication 3,
**caractérisé en ce que**
la fonction de véhicule comprend plusieurs paramètres réglables,
au moins un élément graphique (8.1 - 8.7) sélectionnable est affiché dans la première zone (7.1) pour chaque paramètre,
une première action de commande est détectée, avec laquelle l'un des premiers paramètres est sélectionné par le biais des éléments graphiques (8.1 - 8.7),
une deuxième action de commande est détectée, avec laquelle le premier réglage du paramètre sélectionné est modifié.

5. Procédé selon la revendication 3 ou 4,
**caractérisé en ce que**
la saisie d'utilisateur est détectée dans une première phase, **en ce qu'**un élément graphique (8.1 - 8.7) est sélectionné, sur quoi la deuxième zone (7.2) est divisée en une troisième zone (9.1) et une quatrième zone (9.2), l'élément graphique (8.1 - 8.7) pour le paramètre sélectionné étant représenté mis en valeur dans la troisième zone (9.1) et le premier réglage du paramètre sélectionné étant affiché dans la quatrième zone (9.2).

6. Procédé selon la revendication 5,
**caractérisé en ce que**
le premier réglage du paramètre est la valeur du paramètre,
la valeur est affichée **en ce qu'**une portion (11.1) de la quatrième zone (9.2) est représentée mise en valeur, la taille de la portion (11.1) représentée mise en valeur dépendant de la première valeur du paramètre,
la saisie d'utilisateur dans une deuxième phase comprenant un déplacement d'un élément d'actionnement (17.1) dans une direction, la direction et la durée du déplacement étant détectées, et
la modification de la valeur est affichée **en ce que** la taille de la portion (11.1) représentée mise en valeur de la quatrième zone (9.2) est modifiée en fonction de la direction et de la durée du déplacement de l'élément d'actionnement (17.1).

7. Procédé selon l'une des revendications 3 à 6,
**caractérisé en ce que**
l'élément d'affichage (3.1) possède une délimitation sensiblement circulaire, la première (7.1), la deuxième (7.2), la troisième (9.1) et/ou la quatrième zone (9.2) étant affichées à l'intérieur de la délimitation circulaire et la première zone étant un anneau intérieur (7.1), deuxième zone un premier anneau extérieur (7.2), la troisième zone un anneau central (9.1) et/ou la quatrième zone un deuxième anneau extérieur (9.2).

8. Procédé selon l'une des revendications précédentes,
**caractérisé en ce que**
lorsque le premier utilisateur actionne l'élément de saisie d'utilisateur, la modification du premier réglage est affichée au moins sur la première unité d'affichage (4) pendant la saisie d'utilisateur.

9. Procédé selon la revendication 8,
**caractérisé en ce que**
dans un premier mode d'affichage, un menu (19) est affiché sur la première unité d'affichage (4),
la première unité d'affichage (4) passe dans un deuxième mode d'affichage lorsqu'une intention de commande du premier utilisateur et/ou une saisie d'utilisateur du premier utilisateur sont détectées,
un élément allongé (16) est affiché à la place du menu (19), et
le premier réglage et une valeur du paramètre, la valeur du paramètre étant représentée par une longueur (L) de l'élément allongé (16).

10. Procédé selon la revendication 9,
**caractérisé en ce que**
la saisie d'utilisateur du premier utilisateur est un déplacement d'un élément d'actionnement (17.2) dans une direction, la direction et la durée du déplacement étant détectées, et
longueur (L) de l'élément allongé (16) est modifiée en fonction de la direction et de la durée du déplacement.

11. Dispositif (2) d'affichage d'une modification d'un réglage d'au moins un paramètre d'une fonction de véhicule, comprenant
une première unité d'affichage (4) associé à plusieurs sièges de véhicule (31, 32), un premier réglage du paramètre pouvant être affiché sur la première unité d'affichage (4),
une unité d'identification (12) qui permet de déterminer si un premier utilisateur ou un deuxième utilisateur actionne un élément de saisie d'utilisateur, le premier utilisateur étant associé à un premier siège de véhicule (32) et le deuxième utilisateur étant associé à un deuxième siège de véhicule (31),
une deuxième unité d'affichage (3) qui est uniquement associée au deuxième siège de véhicule (31), et
une unité de commande (6) qui permet de commander la deuxième unité d'affichage (3) lorsqu'il a été déterminé que le deuxième utilisateur actionne l'élément de saisie d'utilisateur, la deuxième unité d'affichage (3) pouvant être commandée de telle sorte que la modification du premier réglage peut être affichée sur la deuxième unité d'affichage (3) pendant la saisie d'utilisateur,
**caractérisé en ce que**
la fonction de véhicule est une fonction de climatisation et le paramètre est une température d'habitacle ou une intensité de ventilation.

12. Dispositif (2) selon la revendication 11,
**caractérisé en ce que**
la première unité d'affichage (4) est disposée dans une console centrale (15) du véhicule (1) et la deuxième unité d'affichage (3) dans un instrument combiné (5) du véhicule (1).

13. Dispositif (2) selon la revendication 11 ou 12,
**caractérisé en ce que**
l'unité d'identification (12) permet de détecter une intention de commande du côté du premier ou du deuxième utilisateur.

14. Véhicule (1) équipé d'un dispositif (2) selon l'une des revendications 11 à 13.
